(19) Europäisches Patentamt / European Patent Office / Office européen des brevets

(11) **EP 2 801 817 B1**

(12) **EUROPÄISCHE PATENTSCHRIFT**

(45) Veröffentlichungstag und Bekanntmachung des Hinweises auf die Patenterteilung:
**02.12.2015 Patentblatt 2015/49**

(51) Int Cl.:
**G01N 22/00** (2006.01)    **G01N 22/04** (2006.01)

(21) Anmeldenummer: **14163172.1**

(22) Anmeldetag: **29.05.2008**

(54) **Vorrichtung und Verfahren zur Masse- und/oder Feuchtemessung von dielektrischen Objekten durch Bestimmung der Güte und Resonanzfrequenz dreier nicht degenerierter, orthogonaler Moden eines Hohlraumresonators**

Device and method for measuring the mass and/or humidity of dielectric objects by determining the quality factor and the resonance frequency of three non-degenerated, orthogonal modes of a cavity resonator

Dispositif et procédé de mesure de masse et/ou d'humidité d'objets diélectriques par détermination de la qualité et de la fréquence de résonance de trois modes non dégénérés et orthogonaux d'une cavité résonnante

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.06.2007 DE 102007029908**

(43) Veröffentlichungstag der Anmeldung:
**12.11.2014 Patentblatt 2014/46**

(62) Dokumentnummer(n) der früheren Anmeldung(en) nach Art. 76 EPÜ:
**08009786.8 / 2 009 427**

(73) Patentinhaber: **TEWS Elektronik GmbH & Co. KG**
**22459 Hamburg (DE)**

(72) Erfinder:
• **Herrmann, Rainer**
**20253 Hamburg (DE)**
• **Schlemm, Udo**
**22604 Hamburg (DE)**

(74) Vertreter: **Hauck Patentanwaltspartnerschaft mbB**
**Postfach 11 31 53**
**20431 Hamburg (DE)**

(56) Entgegenhaltungen:
**DE-A1- 4 411 815    US-A- 5 124 662**

• **A DE WAAL, S MERCER, B J DOWNING: "ONLINE FRUIT WEIGHING USING A 500 MHz WAVEGUIDE CAVITY", ELECTRONICS LETTERS, Bd. 24, Nr. 4, 18. Februar 1988 (1988-02-18), Seiten 212-213, XP055085103,**
• **S R MERCER, B J DOWNING, J D SALTER, L NORDIN: "Microwave discrimination techniques for rock sorting", SECOND JOINT SYMPOSIUM ON ANTENNAS AND PROPAGATION AND MICROWAVE THEORY AND TECHNIQUES 17-19 AUG. 1988 SOUTH AFRICA,, 17. August 1988 (1988-08-17), Seiten 12.1-12.5, XP009148705,**
• **DE WAAL ET AL: "Rock Differentiation using the Properties of Resonant Waveguide Cavities at 500 MHz", DISSERTATION, UNIVERSITY OF CAPE TOWN, SOUTH AFRICA, 3 November 1987 (1987-11-03), pages 1-103, XP009180756,**

**Beschreibung**

Die vorliegende Erfindung betrifft eine Vorrichtung und ein Verfahren zur Masse- und/oder Feuchtemessung von dielektrischen Objekten.

Die Erfindung beruht hinsichtlich der Messung der Masse und/oder der Feuchte von dielektrischen Objekten auf der an sich bekannten Mikrowellentechnik, bei der das zu messende Objekt in einen Resonator eingebracht wird. Aufgrund seiner dielektrischen Eigenschaften verändert das Objekt eine dem Resonator aufgeprägte elektromagnetische Resonanz. Aus der Veränderung der Resonanzkurve sowie der Verschiebung der Resonanzfrequenz werden dann die Masse und die Feuchte des dielektrischen Objekts bestimmt.

Aus EP 1 669 755 B1 ist ein Verfahren zum Messen der Masse und/oder Feuchte des Inhalts von Kapseln bekannt. Für die Messung ist eine Messvorrichtung vorgesehen, die mindestens zwei Resonatoren aufweist. Die durch die Kapsel hervorgerufene Verschiebung der Resonanzfrequenz (A) und die Verbreiterung der Resonanzkurve (B) wird in beiden Resonatoren bestimmt und ausgewertet. Der erste Resonator besitzt ein über die Kapselabmessung homogenes Messfeld zur Bestimmung der Gesamtmasse und/oder - Feuchte der Kapsel. In dem zweiten Resonator, in dem die Kapsel durch eine formatabhängige Probenführung geleitet wird, ist der Kapselinhalt aufgrund der Schwerkraft nicht homogen in der Kapsel verteilt, sondern befindet sich in einem Teil der Kapsel, mit dem ein enges Messfeld zur Bestimmung eines ortsabhängigen Profils der Masse und/oder Feuchte durchlaufen wird. Bei Änderung des Kapselformats ist eine Umrüstung der Messanordnung mit einer neuen formatabhängigen Probenführung erforderlich.

Auf EP 1 467 191 B1 ist ein Verfahren und eine Vorrichtung zur Bestimmung der Masse bei portionierten Wirkstoffeinheiten bekannt. Bei dem Verfahren werden Kapseln, Tabletten oder Dragees durch einen Mikrowellenresonator geleitet, der eine Verschiebung der Resonanzfrequenz und eine Verbreiterung der Resonanzkurve bestimmt. Die gemessenen Größen dienen zur Bestimmung der Masse unter Kompensation des Feuchtigkeitseinflusses, wobei die Masse direkt proportional zur Verschiebung der Resonanzfrequenz und direkt proportional zur Verbreiterung der Resonanzkurve angenommen wird. Es hat sich jedoch herausgestellt, dass die Ergebnisse bei einigen Anwendungen stets mit einem gewissen Maß an Ungenauigkeit behaftet bleiben.

Aus EP 0 372 992 A1 ist eine Messvorrichtung bekannt, die einen kugelförmigen Resonator aufweist. In den Resonator werden zwei identische Resonanzmoden eingespeist, die im Wesentlichen die gleiche Resonanzfrequenz jedoch unterschiedliche Feldorientierung relativ zueinander besitzen. Der Messaufbau soll dazu dienen, die Masse von länglichen Filamenten zu bestimmen. Zur Auswertung der Ergebnisse wird auf eine Differenz der Resonanzfrequenz der beiden Moden abgestellt. Die Differenz der Resonanzfrequenzen hängt empfindlich sowohl von der Masse als auch der Feuchte ab, so dass eine masseunabhängige Feuchtemessung nicht möglich ist.

Aus US 5,124,662 ist ein Verfahren bekannt, um Gegenstände zu klassifizieren, die in einen Resonator eingebracht werden. Die zu klassifizierenden Gegenstände werden im Zentrum des Resonators von einem möglichst starken elektrischen Feld durchsetzt. Um die Probe unabhängig von ihrer Lage im Zentrum des Resonators messen zu können, wird die Mikrowellenstrahlung aus den unterschiedlichen Richtungen überlagert, so dass sie im Zentrum des Resonators zu einem Feld maximaler Feldstärke differieren. Indem die Probe sich durch die Überlagerung von drei orthogonalen Feldern mit etwa gleichen Resonanzen bewegt, werden die Form und die Orientierung der Probe gemittelt, und das Ergebnis ist unabhängig von der Lage der Probe. Die Mittelung erfolgt durch die Rotation des elektrischen Feldvektors und stellt keine unabhängige Analyse in verschiedene Raumrichtungen dar. Nachteilig an diesem Klassifikationsverfahren ist, dass nur räumliche Mittelwerte gemessen werden können und somit die Messauflösung begrenzt ist. Nachteilig ist weiterhin, dass das Verfahren nur funktioniert, wenn der Probekörper exakt in der Resonatormitte platziert wird. Dazu ist eine zusätzliche Sensorik erforderlich.

Aus DE 102 26 845 A1 ist eine Anordnung zur Ermittlung der Verteilung der komplexen Permittivität eines Untersuchungsobjektes bekannt. In den Resonator werden monofrequente Mikrowellen eingespeist und Amplitude und Phase der transmittierten und reflektierten Signale ausgewertet. Eine Auswertung der Resonanz des Resonators erfolgt nicht. Das Messgut ruht bei der Messung im Resonator, der nur die Funktion der Abschirmung hat. Die räumliche Verteilung der Permitivität wird dadurch untersucht, dass an verschiedenen Positionen Mikrowellen ein- und ausgekoppelt werden.

Aus B.J. Downing et al.: "Online Fruit Weighing Using a 500 MHz Waveguide Cavity", Electronics Letters, Band 24, Nr. 4, Seiten 212 bis 213, wird ein Verfahren zur Messung von unregelmäßig geformten Früchten vorgeschlagen, bei dem gleichzeitig in zueinander senkrecht stehenden Polarisationsebenen gemessen wird.

Die Doktorarbeit "ROCK DIFFERENTIATION USING THE PROPERTIES OF RESONANT WAVEGUIDE CAVITIES AT 500 MHZ" von A. De Waal bei Professor B. J. Downing (University of Cape Town, 3 November 1987) offenbart eine Vorrichtung zur Masse- und/oder Feuchtemessung von dielektrischen Objekten, mit einer Auswerteeinheit, einem Hochfrequenzgenerator, einem Hochfrequenzdetektor und einem Hochfrequenzresonator, wobei

-   der Hochfrequenzdetektor in dem Resonator die auftretenden Frequenzen messen kann, wobei der Resonator eine Eintritts-und eine Austrittsöffnung aufweist, die eine Bewegung des zu messenden dielektrischen Objekts durch den Resonator erlauben, und

- die Auswerteeinheit für die gemessenen Frequenzen eine Verschiebung der Resonanzfrequenz und eine Veränderung der Resonanzkurve bestimmen kann und aus den bestimmten Werten für die Verschiebung der Resonanzfrequenz und/oder die Veränderung der Resonanzkurve die Masse und/oder Feuchte des sich durch den Resonator bewegenden dielektrischen Objekts bestimmen kann, wobei die Messwerte für ein sich durch den Resonator bewegendes Messobjekt 1800 mal hintereinander aufgezeichnet und zu einem Zeitpunkt ausgewertet werden, in dem für die Mode das Maximum der Verstimmung der Resonanzfrequenz bei Durchtritt des Messobjekts durch den Resonator detektiert worden ist.

Die Doktorarbeit weist auch darauf hin, dass, um die Orientierungsabhängigkeit der Messung zu erhöhen, der Resonator mit aufeinander senkrecht stehenden Moden angeregt werden kann.

Der Erfindung liegt die Aufgabe zugrunde, eine Vorrichtung und ein Verfahren zur Masse- und/oder Feuchtemessung von dielektrischen Objekten bereitzustellen, das mit einfachen Mitteln eine schnelle und präzise Messung an den dielektrischen Objekten erlaubt.

Erfindungsgemäß wird die Aufgabe durch eine Vorrichtung mit den Merkmalen gemäß Anspruch 1 gelöst. Die Aufgabe wird ebenfalls durch ein Verfahren mit den Merkmalen gemäß Anspruch 7 gelöst. Vorteilhafte Ausgestaltungen des Verfahrens sowie der Vorrichtung sind Gegenstand der Unteransprüche.

Die erfindungsgemäße Vorrichtung dient zur Masse- und/oder Feuchtemessung von dielektrischen Objekten. Die Vorrichtung nutzt die Mikrowellenresonanztechnik und besitzt eine Auswerteeinheit, mindestens einen Hochfrequenzgenerator, mindestens einen Hochfrequenzdetektor und einen Hochfrequenzresonator. Die die Resonanz erzeugenden elektromagnetischen Felder werden über den mindestens einen Hochfrequenzgenerator erzeugt und in den Hochfrequenzresonator eingespeist. Über den mindestens einen Hochfrequenzdetektor können die elektrischen und/oder magnetischen Eigenschaften von Resonanzen in dem Hochfrequenzresonator gemessen werden. Erfindungsgemäß erzeugt der mindestens eine Hochfrequenzgenerator drei voneinander unabhängige Moden mit unterschiedlichen Resonanzfrequenzen in dem Hochfrequenzresonator. Unabhängige Moden bedeutet in diesem Zusammenhang, dass bei der Anregung der ersten Mode keine oder nur eine geringe Anregung für die weiteren Moden erzeugt wird und die elektrischen Felder der Moden einen von 0° und 180° verschiedenen Winkel miteinander einschließen. Die Richtungen der elektrischen Felder sind nicht deckungsgleich, sondern in verschiedene, voneinander unabhängige Raumrichtungen orientiert, hierbei stehen drei Felder senkrecht zueinander. Weiterhin kann der mindestens eine Hochfrequenzdetektor für jede Mode in dem Resonator die auftretenden Frequenzen messen. Der Hochfrequenzdetektor ist in der Lage, in jeder Mode separat die auftretenden Frequenzen zu messen, wobei die Messung der Frequenzen es erlaubt, eine Resonanzkurve und die Resonanzfrequenz zu bestimmen. Die Auswerteeinheit bestimmt für die gemessenen Frequenzen jeder Mode eine Verschiebung der Resonanzfrequenz und eine Veränderung der Resonanzkurve. Aus den bestimmten Werten für die Verschiebung der Resonanzfrequenz und für die Veränderung der Resonanzkurve werden die Werte für die Masse und/oder Feuchte des dielektrischen Objekts unabhängig voneinander in dem Resonator bestimmt, die bestimmten Werte sind dabei unabhängig von der Position, der Bewegungsart und der speziellen Form des Objekts. Eine Besonderheit der erfindungsgemäßen Vorrichtung liegt darin, dass mehrere voneinander unabhängige Mode in einem Resonator erzeugt und unabhängig voneinander ausgewertet werden. Der Erfindung liegt die Erkenntnis zugrunde, dass die bei bekanntem Aufbau sich ergebenden systematischen Schwankungen in den Messwerten durch die unterschiedliche Lage des Messobjekts bedingt sind. Betrachtet man beispielsweise ein dielektrisches Objekt, das bezüglich zweier Achsen eine unterschiedliche Ausdehnung und damit verschiedene Massen- und Feuchteverteilungen besitzt, so hängt das Messergebnis von der Lage des zu messenden Objekts relativ zu dem elektrischen Feld ab. Durch die Verwendung von zwei oder mehr unabhängigen Moden kann der Messvorgang in voneinander unabhängige Richtungen des zu messenden Objektes ausgeführt werden und daher unterschiedliche räumliche Orientierungen der Probe während der Bewegungen und unterschiedliche Probenformen entlang der gemessenen Richtungen kompensieren.

Erfindungsgemäß bestimmt der mindestens eine Hochfrequenzdetektor während eines Messzyklus mehrfach die auftretenden Frequenzen in dem Resonator. Dies bedeutet, dass während eines Messzyklus nicht nur einmal die Veränderung des elektromagnetischen Feldes gemessen wird, sondern während eines Messzykluses eine Vielzahl von Messvorgängen durchgeführt wird.

Erfindungsgemäß weist jede Mode eine Resonanzfrequenz auf, die von den Resonanzfrequenzen der übrigen Moden verschieden ist. Die Resonanzfrequenzen der Moden besitzen jeweils paarweise einen Mindestfrequenzabstand, der mindestens 100 MHz beträgt. Durch den Abstand der Resonanzfrequenzen der einzelnen Moden kann sichergestellt werden, dass die Signale für jede Resonanzfrequenz ungestört von den Signalen der übrigen Resonanzfrequenzen ausgewertet werden können. Auf diese Weise ist eine unabhängige Analyse des dielektrischen Objekts in jeder Raumrichtung, die durch eine der Moden vorgegeben ist, möglich, und eine Mittelwertbildung kann vermieden werden.

Um die elektrischen Objekte zur Messung im Messbereich des Resonators zuführen zu können, ist der Resonator erfindungsgemäß mit einer Eintritts- und einer Austrittsöffnung versehen. Die Öffnungen sind derart im Resonator angeordnet, dass sie eine Bewegung des zu messenden dielektrischen Objekts durch den Resonator erlauben. Die Bewegung kann dabei eine freie Bewegung sein, in der das zu messende Objekt beispielsweise frei unter Einfluss der Schwerkraft durch den Resonator fällt. Auch ist es möglich, das zu messende Objekt in einem Luftstrom frei durch den Resonator zu bewegen.

Ferner spielt die Art der Bewegung der Probekörper durch den Messresonator nur eine untergeordnete Rolle, so dass eine vom Format der Probekörper abhängige Führung nicht unbedingt erforderlich ist. Damit entfällt nicht nur eine zeitintensive Umrüstung bei Formatumstellungen des Produktionsablaufes am Gerät, sondern es ist auch möglich, die Durchsatzleistung von Probekörpern pro Zeiteinheit ohne eine mechanische Einschränkung zu erhöhen. Damit ist beispielsweise selbst bei Produktionsraten bis 10^6 Probekörpern pro Stunde eine hundertprozentige Kontrolle der Masse und Feuchte jedes einzelnen Probekörpers möglich.

Bevorzugt sind mindestens zwei Hochfrequenzgeneratoren vorgesehen, deren Resonanzfrequenzen jeweils voneinander verschieden sind. Bevorzugt ist für jede Resonanzmode mit ihrer Resonanzfrequenz ein eigener Hochfrequenzgenerator vorgesehen.

In einer bevorzugten Ausgestaltung bestimmt die Auswerteeinheit als Veränderung der Resonanzkurve eine Verbreiterung der Resonanzkurve im Bereich der Resonanzfrequenz. Alternativ ist es möglich, dass die Auswerteeinheit als Veränderung der Resonanzkurve die Änderung der Resonanzamplitude bestimmt. Auch ist es möglich, zur Auswertung eine Kombination der Änderung der Resonanzamplitude und der Verbreiterung der Resonanzkurve anzusetzen. Für die Auswertung wird die Veränderung der Resonanzkurve mit einer Verschiebung der Resonanzfrequenz durch das eingetretene dielektrische Objekt kombiniert.

Hinsichtlich der Auswertung der Messergebnisse für die unterschiedlichen Moden gibt es verschiedene Ansätze. In einem bevorzugten Ansatz wertet die Auswerteeinheit die Veränderung der Resonanzkurve und die Verschiebung der Resonanzfrequenz für jede Mode gleichzeitig aus. Dies bedeutet, dass die Messergebnisse aller drei Moden in einem gemeinsamen Zeitpunkt ausgewertet werden. In einem alternativen Ansatz wertet die Auswerteeinheit die Veränderung der Resonanzkurve und die Verschiebung der Resonanzfrequenz für jede Mode unabhängig aus. Beide Ansätze zur Auswertung erlauben es, lageunabhängige Messergebnisse für das dielektrische Objekt zu gewinnen.

In einer bevorzugten Ausgestaltung sind für jede Mode genau ein Hochfrequenzgenerator und genau ein Hochfrequenzdetektor vorgesehen. In einer alternativen Ausgestaltung ist mindestens einer der Hochfrequenzgeneratoren zur Erzeugung von mehreren Moden vorgesehen. Ebenfalls ist es möglich, einen Hochfrequenzdetektor vorzusehen, der für mehrere Moden die auftretenden Frequenzen messen kann. In einer bevorzugten Ausgestaltung sind der Hochfrequenzdetektor und/oder der Hochfrequenzgenerator zwischen den Moden umschaltbar, so dass während eines Messzyklus eine Vielzahl von Messwerten erfasst werden kann.

Bei der erfindungsgemäßen Vorrichtung ist der Resonator so ausgelegt, dass drei Moden in dem Resonator generiert werden. Erfindungsgemäß weisen in einem zentralen Messbereich die elektrischen Felder der Moden in unterschiedliche, räumliche Richtungen, wobei die räumlichen Richtungen senkrecht aufeinander stehen. Die drei Moden sind zusätzlich entkoppelt. Es werden somit in den zu einer Mode gehörenden und zum jeweiligen Detektor führenden Auskoppelvorrichtung nur Resonanzschwingungen detektiert, die zu dieser Mode gehören, wobei andere unabhängig davon schwingende Moden keinen Anteil an diesem Messsignal haben.

In einer bevorzugten Ausgestaltung liegen die Moden des Resonators in einem Frequenzbereich von 0,5 GHz und 20 GHz.

Die geometrischen Abmessungen des Resonators, insbesondere des Resonatorinnenraums, können unterschiedliche Gestalt besitzen. In einer bevorzugten Ausgestaltung ist der Resonatorinnenraum als ein Quader ausgebildet. Alternativ kann der Resonator auch einen Innenraum in Form eines Ellipsoides aufweisen oder eine Zylinderform mit ellipsenförmigem Querschnitt.

In einer Weiterbildung ist zwischen Eintritts- und Austrittsöffnung des Resonators ein Formatteil zur Führung des zu messenden Objektes vorgesehen. Beispielsweise kann das zu messende Objekt entlang dem Formatteil frei durch den Resonator rutschen oder fallen. Dieses produktführende, nichtmetallische, kreisförmige oder rechteckige Rohr hat einen Querschnittsdurchmesser, der so groß ist, dass alle in Frage kommenden Probekörper hindurchpassen, das Format der Probekörper also keine Rolle spielt. In einer bevorzugten

Ausführungsform ist es aber auch möglich, zur Einschränkung der Bewegungsmöglichkeiten der Probekörper bei der Bewegung durch den Resonator den Durchmesser des Probenrohrs an das Format der Probekörper anzupassen. In diesem Fall muss bei Wechsel des Formats des Produktes auch das Format des probeführenden Rohres gewechselt werden. Besonders vorteilhaft ist eine Verwendung von Formatteilen bei der Messung mit zwei unabhängigen Moden.

Die erfindungsgemäße Aufgabe wird ebenfalls durch ein Verfahren zur voneinander unabhängigen Messung von Masse und/oder Feuchte von dielektrischen Objekten gelöst. Bei dem erfindungsgemäßen Verfahren ist eine Auswerteeinheit vorgesehen, mindestens ein Hochfrequenzgenerator und mindestens ein Hochfrequenzdetektor, die mit einem Resonator zusammenwirken, um die Veränderung einer Mode in dem Resonator zu erfassen. Während des Messvorgangs werden drei voneinander entkoppelte Mode in dem Resonator erzeugt und mit dem mindestens einen Hochfrequenzdetektor für jede der Mode in dem Resonator auftretenden Frequenzen gemessen. Die entkoppelten Moden sind unabhängig voneinander und bilden bevorzugt in dem Resonator einen Messbereich, in dem die elektrischen Felder in linear unabhängige Raumrichtungen weisen. Die Auswerteeinheit ermittelt für die gemessenen Frequenzen jeder Mode eine Verschiebung der Resonanzfrequenz und wertet eine Veränderung der Resonanzkurve aus. Aus der Verschiebung der Resonanzfrequenz und der Veränderung der Resonanzkurve wird die Masse und/oder Feuchtigkeit des dielektrischen Objektes unabhängig voneinander bestimmt.

Bevorzugt wertet die Auswerteeinheit als Veränderung der Resonanzkurve eine Verbreiterung der Resonanzkurve aus.

In einem alternativen Verfahren wertet die Auswerteeinheit als Veränderung der Resonanzkurve eine Änderung der Resonanzamplitude aus.

Erfindungsgemäß bestimmt der mindestens eine Hochfrequenzdetektor während eines Messzyklus mehrfach die auftretenden Frequenzen in dem Resonator.

Bei dem erfindungsgemäßen Verfahren wird jede Mode mit einer Resonanzfrequenz generiert, die von den Resonanzfrequenzen der übrigen Moden verschieden ist. Die Resonanzfrequenzen der Moden weisen jeweils paarweise einen Mindestfrequenzabstand auf. Der Mindestfrequenzabstand, der mindestens 100 MHz beträgt, stellt sicher, dass die Resonanzmoden einzeln und unabhängig voneinander ausgewertet werden können. Auf diese Weise ist es möglich, bei den zu messenden dielektrischen Objekten die dielektrischen Eigenschaften für jede Richtung einer Mode unabhängig von den Richtungen der übrigen Moden zu erfassen, so dass eine genaue Analyse der Messergebnisse möglich ist und keine Mittelung der Ergebnisse erfolgen muss.

Bei der Auswertung wertet die Auswerteeinheit die Veränderung der Resonanzkurve und die Verschiebung der Resonanzfrequenz für jede Mode gleichzeitig aus.

Die Forderung nach Gleichzeitigkeit der Auswertung, die für schnell bewegte Probekörper erhoben werden kann, erfordert die unabhängige Verwendung von drei Mikrowellengeneratoren und drei Mikrowellendetektoren. Ist die Bewegung des Probekörpers langsam genug, kann auch die zeitlich hintereinander erfolgende Vermessung der voneinander unabhängigen Resonanzmoden durch einen Umschalter von Mikrowellengeneratoren und/oder Detektoren auf die unterschiedlichen Resonanzmoden erfolgen.

In einer vorteilhaften Ausgestaltung des Verfahrens wird die Veränderung der Resonanzkurve und die Verschiebung der Resonanzfrequenz für jede Mode zu einem Zeitpunkt ausgewertet, der unabhängig von den Zeitpunkten ist, in denen die Werte der anderen Moden ausgewertet werden.

Auch im Hinblick auf die Erzeugung der Resonanzen in dem Resonator sind unterschiedliche Ansätze möglich. In einem ersten Ansatz wird jede Mode durch genau einen Hochfrequenzgenerator erzeugt und durch genau einen Hochfrequenzdetektor vermessen. Alternativ ist es auch möglich, mindestens zwei Modi durch einen Hochfrequenzgenerator zu erzeugen. Auch ist es alternativ oder ergänzend möglich, die auftretenden Frequenzen in mindestens zwei Moden durch genau einen Hochfrequenzdetektor zu messen.

Bevorzugt ist für jede Mode eine Auskopplungseinrichtung vorgesehen, die sich in einem Schwingungsknoten der anderen Moden befindet. Zweckmäßigerweise sind die Resonanzfrequenzen der unterschiedlichen Moden durch spezielle bauliche Maßnahmen des Resonators so weit auseinander gezogen, dass die Trennung der Moden durch spezielle Bandpassfilter in jeder einzelnen Detektorleitung verstärkt werden kann.

In einer alternativen Ausführung des erfindungsgemäßen Verfahrens wird der mindestens eine Hochfrequenzdetektor und/oder der mindestens eine Hochfrequenzgenerator zwischen den Moden umgeschaltet.

Erfindungsgemäß werden in dem Resonator drei Moden generiert. Die Moden sind in dem Resonator so orientiert, dass in einem Messbereich die elektrischen Felder der Moden unterschiedliche Richtungen aufweisen. Die elektrischen Felder stehen erfindungsgemäß senkrecht aufeinander.

Um einen möglichst großen Durchsatz an zu messenden Objekten zu erzielen, werden diese durch den Resonator während des Messvorgangs bewegt. Hierbei ist es möglich, dass sich die Objekte frei durch den Messbereich bewegen. Eine freie Bewegung kann beispielsweise durch die Schwerkraft bei frei fallenden oder auf Rutschen gleitenden Objekten und/oder durch einen Luftstrom erzeugt werden. In einer alternativen Ausgestaltung werden die zu messenden Objekte geführt durch den Messbereich bewegt. Dies bedeutet, dass die zu messenden Objekte beispielsweise durch den Messbereich in formatabhängigen Rohren rutschen.

Ein bevorzugtes Ausführungsbeispiel wird nachfolgend näher erläutert. Es zeigt:

Fig. 1 Messergebnisse für unterschiedliche Tablettensorten bei einer einheitlichen Kalibrierung der Messvorrichtung, die sich auf einer Rutsche mit 40° Neigung durch den Mikrowellenresonator bewegen,

Fig. 2 Messergebnisse für unterschiedliche Tabletten, die sich bei einer einheitlichen Kalibrierung der Messvorrichtung auf einer 40° Rutsche durch den Resonator bewegen,

Fig.3 einen Resonator mit drei unabhängigen Resonanzmoden.

Eine schnelle und sehr genaue Messung der Masse relativ kleiner Objekte ist besonders im Bereich pharmazeutischer Produkte, wie beispielsweise bei Tabletten oder Kapseln von besonderer Bedeutung, da bei diesen Objekten die Gesamtmasse proportional zu ihrem Wirkstoffgehalt ist. Zusätzliche wichtige Informationen über die Eigenschaften dieser Objekte ergeben sich aus einer Messung der Feuchte, so sind beispielsweise die mechanischen Eigenschaften von gepressten Tabletten oder Hardgelatinekapseln stark abhängig von ihrem Feuchtegehalt und auch der Kapselinhalt zeigt bei unterschiedlichen Feuchten verschiedene Eigenschaften. Eine besondere Schwierigkeit bei der Messung von gepressten Tabletten besteht darin, dass diese eine beliebige räumliche Gestalt besitzen können. So können die zu messenden Objekte beispielsweise kugelförmig, würfelförmig, länglich, dreieckig oder sonst wie geformt sein. Bei Messobjekten, die keine Kugelsymmetrie aufweisen, ist die Messung in einem Resonator stets lageabhängig. Das Ergebnis hängt von dem Verhältnis des Oberflächenanteils des Objekts, der parallel zu den Feldlinien des Resonators liegt, zu dem Oberflächenanteil des Objekts ab, auf dem die Feldlinien senkrecht stehen. Bei Parallelität von Feldlinien und Oberflächenanteilen des Messobjekts geht das elektrische Feld kontinuierlich in das Produkt über, die Resonanzfrequenzverstimmung des Resonators ergibt sich aus dem Effekt der Verkürzung der Wellenlänge innerhalb des Messprodukts. Bei Absenkung der Resonanzfrequenz auf den neuen Wert hat das Feld nahezu den identischen räumlichen Verlauf wie im Fall des leeren Resonators. Die störungstheoretische Lösung der Maxwellschen Gleichung ergibt in diesem Fall, wenn der Feldverlauf sich durch ein anwesendes Produkt nicht ändert, folgenden Ausdruck für die relative Änderung der Resonanzfrequenz:

$$\frac{f_0 - f_p}{f_0} = \mathrm{F}\,(\varepsilon - 1)$$

wobei $f_0$ die Resonanzfrequenz des leeren Resonators, $f_P$ die Resonanzfrequenz die für die Wirkung der parallelen Oberflächenanteile des Messobjekts gefüllten Resonators steht, F das Verhältnis der Mikrowellen-Feldenergie im Bereich der Probe zu der des gesamten Resonators und $\varepsilon$ die relative Dielektrizitätskonstante (Realteil) des Probenmaterials bezeichnet.

Bei senkrechter Feldorientierung zum Oberflächenanteil des Messobjekts hingegen macht das elektrische Feld beim Übergang in das Probenmaterial einen Sprung, um den Faktor $\varepsilon$ auf den Wert E/$\varepsilon$. Bezeichnet man mit $f_S$ die Resonanzfrequenz, die sich durch die Wirkung der senkrechten Oberflächenanteile des Messobjekts im gefüllten Resonator einstellt, dann liefert die Störungstheorie den Ausdruck für die relative Frequenzverschiebung bei senkrechter Feldorientierung in folgendem Ausdruck:

$$\frac{f_0 - f_s}{f_0} = \mathrm{F}\,\frac{\varepsilon - 1}{\varepsilon}$$

Aus dem Vergleich der beiden Ausdrücke wird deutlich, dass ein willkürlich geformtes Messobjekt, das sich im Mikrowellenresonator befindet, abhängig von seiner Orientierung zu dem Mikrowellenfeld im Messbereich unterschiedliche Messsignale hervorruft. Dies ist besonders wichtig bei der Messung an bewegten Objekten, die bei gleichem Volumen in unterschiedlicher Orientierung das Messfeld passieren können und somit unterschiedliche Mikrowellenmesswerte hervorrufen. Hierdurch kommt es zu einer beschränkten Genauigkeit der Masse- und/oder Feuchtigkeitsmessung. Auch Schlinger- oder Purzelbewegung der Messobjekte bei Durchtritt durch das Messobjekt führen zu Messfehlern.

In einer bevorzugten Ausführungsform des erfindungsgemäßen Verfahrens wird zur schnellen Masse und/oder Feuchtigkeitsmessung willkürlich geformter Objekte in beliebiger Lage mit einem Mikrowellenresonator unter Verwendung von drei gleichzeitig anregbaren Resonanzmoden gearbeitet. Die elektrischen Felder dieser Resonanzmoden stehen senkrecht aufeinander und bilden ein orthogonales Dreibein. Somit ist es möglich, die jeweiligen Volumenanteile des Messobjekts in allen drei Raumrichtungen bei gleicher Orientierung des elektrischen Feldes zu erfassen.

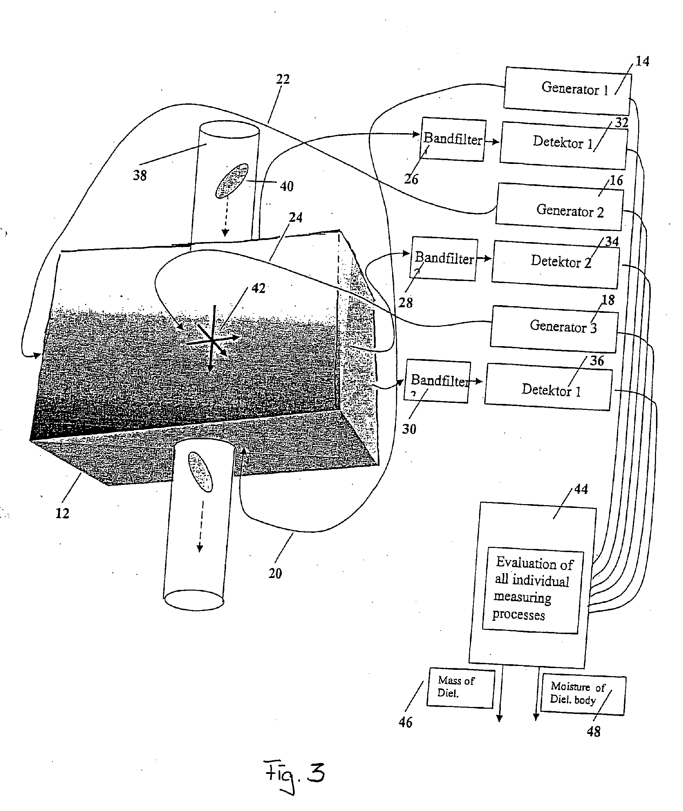

Figur 3 zeigt im Prinzip den Messaufbau eines Resonators 12 mit drei unabhängigen, senkrecht zueinander stehenden Resonanzmoden. Die Resonanzmoden werden von drei Hochfrequenzgeneratoren 14, 16, 18 erzeugt und an unterschiedlichen Seiten des Resonators 12 eingekoppelt. Die Einkopplung der jeweiligen Resonanzmoden ist schematisch über die Pfeile 20, 22 und 24 dargestellt. Ebenfalls schematisch dargestellt durch Pfeile ist die Zuleitung zu Bandfiltern 26, 28, 30. Wie der Prinzipskizze in Figur 3 zu entnehmen ist, speist der Hochfrequenzgenerator 16 an einer Flachseite des Resonators 12 sein Signal ein, das an der gegenüberliegenden Flachseite ausgekoppelt und an den Bandfilter 28 weitergeleitet wird, von wo die gefilterten Ergebnisse an den Detektor 34 geleitet werden. Ebenso verhält es sich mit den anderen Raumrichtungen, wobei der Generator 14 an einer Flachseite des Resonators 12 eingekoppelt wird und die empfangenen Signale an der gegenüberliegenden Seite ausgekoppelt und an den Bandfilter 26 weitergeleitet werden. Die gefilterten Werte gelangen zu dem Detektor 32. Für die dritte Raumrichtung wird analog verfahren, wobei hier die Signale des Generators 18 an der großen Flachseite des Resonators 12 eingekoppelt und an der gegenüberliegenden großen Flachseite ausgekoppelt werden, von wo sie über den Bandfilter 30 an den Detektor 36 weitergeleitet werden.

Ebenfalls schematisch dargestellt in Figur 3 ist ein Führungsrohr 38, durch das die zu vermessenden Tabletten 40 frei fallen können. Das Führungsrohr besteht aus einem nichtmetallischen Material und führt durch das Zentrum des Resonators 12. Wie in der Figur 3 durch das Dreibein 42 angedeutet, stehen im Zentrum des Resonators 12 die elektrischen Felder der Moden senkrecht aufeinander. Die Funktionen der Bandfilter 26, 28, 30 besteht darin, die gemessenen Resonanzwerte zu filtern und unerwünschte Beiträge zu den Resonanzen zu dämpfen bzw. zu unterdrücken.

Voraussetzung für die Verwendung von Bandfiltern ist selbstverständlich, dass die drei Hochfrequenzgeneratoren 14, 16, 18 mit voneinander beabstandeten Resonanzfrequenzen arbeiten.

Die von den Detektoren 32, 34, 36 aufgenommenen Daten werden an eine Auswerteeinheit 44 weitergeleitet. Die Auswerteeinheit 44 ist ebenfalls mit den Generatoren 14, 16, 18 verbunden, um diese anzusteuern.

Die Auswerteeinheit 44 berechnet dann im Ergebnis die Masse 46 des dielektrischen Körpers 6 und die Feuchte 48 des dielektrischen Körpers. Als Feuchte wird allgemein stets eine Konzentrationsgröße verstanden, die sich als Quotient aus der Wassermasse und der Gesamtmasse (Trockenmasse) eines Probekörpers ergibt, angegeben in Prozent.

Ein Resonator mit drei gleichzeitig anregbaren, senkrecht aufeinander stehenden Resonanzmoden kann in unterschiedlichen Ausführungen hergestellt werden. Eine mögliche Ausführungsform besteht in einem Resonator, der wie ein Ellipsoid geformt ist. Eine weitere mögliche Ausführungsform ist die Form eines Quaders. Ebenfalls möglich ist es, einen Resonator vorzusehen, der die Form eines Zylinders aufweist, dessen Querschnittsfläche die Form einer Ellipse besitzt. Die Einkopplung der Mode in den Resonator erfolgt dabei so, dass für die drei elektrischen Felder jeweils sichergestellt wird, dass nur die gewünschte Resonanzmode angeregt wird. Ferner muss sichergestellt werden, dass kein Übersprechen zwischen den einzelnen Moden auftritt, wodurch die Messergebnisse verfälscht werden würden. Bei einem Übersprechen tritt das Phänomen auf, dass durch Anregung einer Mode zusätzliche weitere Moden angeregt werden, die einen Beitrag zu dem Messergebnis liefern. Ein derartiges Übersprechen kann zum einen durch besondere Anordnung der Feldeinkopplungen vermieden werden, indem die Koppelantennen oder Koppelaperturen der angeregten Resonanzmode im elektrischen Knoten der anderen Resonanzmoden angebracht werden. Zum anderen kann durch bauliche Maßnahmen am Resonator dafür gesorgt werden, dass die drei Resonanzfrequenzen so weit auseinander liegen, dass durch speziell angepasste Bandpassfilter die anderen Moden keine Störungen der eigentlichen Resonanzmode bewirken können.

Erfindungsgemäß wird bei jeder Resonanzmode als Messwert die Veränderung der Resonanzkurve bei Wechselwirkung mit dem Messgut aufgenommen. Ferner wird die Verschiebung der Resonanzfrequenz (A) für jede Mode aufgenommen. Als Veränderung der Resonanzkurve wird in dem Ausführungsbeispiel die Verbreiterung der Resonanzkurve (B) gemessen. Der Messvorgang liefert insgesamt jeweils drei Messwerte, so dass die Messwerte $A_1$, $A_2$, $A_3$, $B_1$, $B_2$, $B_3$ für jedes Messobjekt zur Verfügung stehen. Diese Messwerte sind abhängig von der Feuchte und der Masse des Messobjekts in den drei Raumrichtungen, die den Resonanzmoden zugeordnet sind. Aus den sechs Messwerten lassen sich die Masse und die Feuchte des gesamten Messobjekts berechnen. Die berechneten Werte für Masse und Feuchte sind dann unabhängig von der Orientierung des Messobjekts im Messfeld und unabhängig von der Probenform des Messobjekts. Bei unterschiedlicher Orientierung des Messobjekts im Messfeld variieren die Signale in den einzelnen Raumrichtungen, die gemessene Masse und die Feuchte des gesamten Messobjekts bleibt jedoch von der Orientierung unbeeinflusst.

Die Berechnung der Masse und der Feuchte des gesamten Messobjekts aus den sechs Einzelmesswerten ($A_1$, $A_2$, $A_3$, $B_1$, $B_2$, $B_3$) wird folgendermaßen durchgeführt:

$$\underline{Masse} = k_1 \cdot A_1 + k_2 \cdot A_2 + k_3 \cdot A_3 + k_4 \cdot B_1 + k_5 \cdot B_2 + k_6 \cdot B_3 + k_7$$

$$\underline{Feuchte} = c_1 \cdot B_1/A_1 + c_2 \cdot B_2/A_2 + c_3 \cdot B_3/A_3 + c_4,$$

wobei die Koeffizienten $k_j$ (j = 1, ..., 7) und $c_j$ (j = 1,..., 4) die Kalibrationskoeffizienten darstellen. Die Massemessung ist feuchtekompensiert, die so gewonnene Feuchtemessung ist ebenfalls unabhängig von der Masse des Messobjekts.

Berücksichtigt man nun, dass das Messobjekt bei seiner Bewegung durch das Messfeld eine gewisse Zeit benötigt, so können während eines solchen Messzyklus mehrfach die sechs Messgrößen hintereinander aufgezeichnet werden. Um aus dieser Zeitreihe von Messgrößen die richtigen auszuwerten, bestehen grundsätzlich zwei unterschiedliche Ansätze. Bei dem ersten Ansatz, der bevorzugt dann Anwendung findet, wenn eine unkontrollierte Bewegung der Probe durch den Resonator durch eine formatabhängige Probenführung verhindert oder eingeschränkt wird, wird für jede Mode das Maximum der Verschiebung der Resonanzfrequenz gewählt und in diesem Zeitpunkt jeweils die Messgrößen A und B für diese Mode bestimmt. In einem alternativen Auswertevorgang wird für eine Mode das Maximum der Verstimmung der Resonanzfrequenz bei Durchtritt des Messobjekts durch den Resonator bestimmt. Ist dann für eine Mode das Maximum der Verstimmung der Resonanzfrequenz detektiert worden, so werden die Messwerte der übrigen Moden im gleichen Zeitpunkt ausgewertet. Hierdurch wird erreicht, dass das Messobjekt durch die drei orthogonal zueinander stehenden Moden in einer einheitlichen Position gemessen wird. Damit wird der Probekörper in beliebiger Position von unterschiedlichen Seiten aus betrachtet, so dass eine vollständige Kompensation des Lageeinflusses möglich ist. Dieser zweite Auswertevorgang kann dort angewandt werden, wo Probekörper in beliebiger Bewegung den Resonator passieren und im Interesse einer hohen zeitlichen Durchsatzleistung von Probekörpern auf jede Führung verzichtet wird.

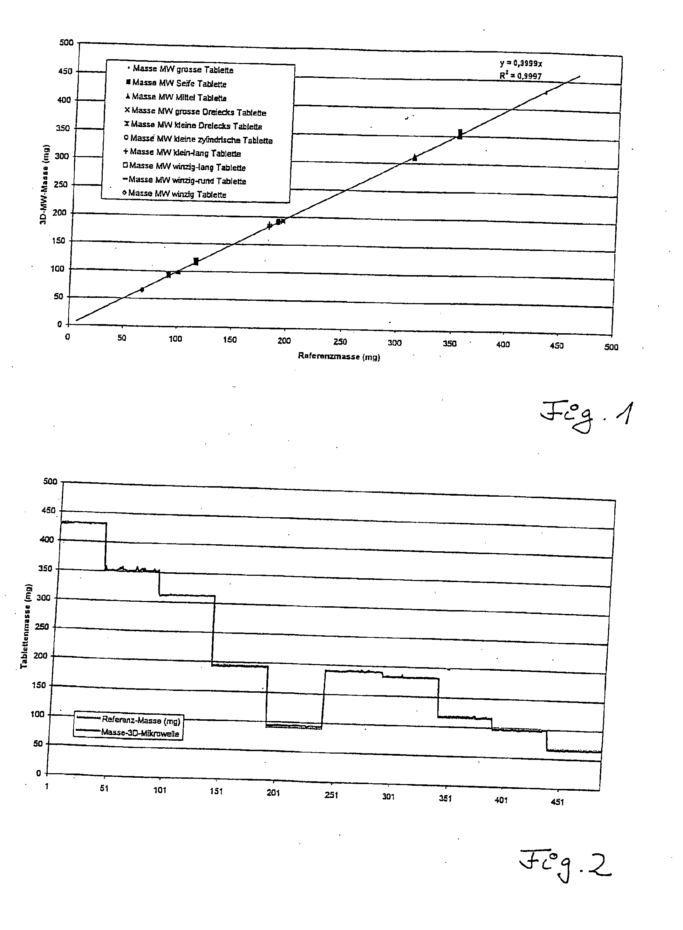

Der Transport der Messobjekte durch den Resonator kann durch ein nicht metallisches Rohr entweder im freien Fall oder rutschend erfolgen. Figur 1 zeigt beispielsweise die Messergebnisse bei einer um 40° geneigten Rutsche, auf der eine Vielzahl von unterschiedlich geformten Tabletten mit unterschiedlichem Gewicht durch das Messfeld rutschen. In der in Figur 1 dargestellten Messung sind diese Tabletten gegen ihre Referenzmasse aufgetragen. Die Kurve zeigt bereits sehr deutlich, dass es mit einer solchen Drei-Moden-Messtechnik möglich ist, die Messpräzision für die Massemessung der Probekörper mit einer einzigen Kalibrationskurve deutlich zu steigern, unabhängig von Lagevariationen der Probekörper, von deren Form, von deren Feuchtegehalt und Zusammensetzung. Dieses Ergebnis wird auch durch Figur 2 bestätigt, bei der jeweils 50 Proben von Tabletten mit einer Form und einer Masse auf einer 40° Rutsche durch das Messfeld des Resonators gerutscht sind. Auch hier wird deutlich, dass in einem Massebereich von 50 mg bis 450 mg zuverlässige Messungen gewonnen werden können, ohne dass systematische Fehler im Rahmen der gewünschten Genauigkeit auftreten.

Für Messungen an kleinsten Messobjekten kann die Messgenauigkeit der Masseerfassung durch Verwendung zusätzlicher Formatteile zur Führung der Messobjekte weiter gestaltet werden. Dies ist besonders der Fall, wenn die zur Messung verwendeten drei Messfelder in dem Messbereich nicht vollständig homogen sind. Die Homogenität der Felder geht stark in die Massebestimmung ein, spielt aber für die Feuchtebestimmung eine untergeordnete Rolle. Als Formatteile können beispielsweise Proberöhrchen mit unterschiedlichem, an die Probegröße angepasstem Innendurchmesser eingesetzt werden. Auch können Rutschen unterschiedlicher Bereiche als Formatteile eingesetzt werden.

Neben der bereits vorstehend angesprochenen Messung mit drei Resonanzmoden ist es auch möglich, das erfindungsgemäße Messverfahren nur durch einen einzigen HF-Generator und einen einzigen HF-Detektor zu realisieren, wobei während der Messung ein schnelles Umschalten durch einen Halbleiter-Umschalter erfolgt. Wichtig hierbei ist, dass die Umschaltgeschwindigkeit groß gegenüber der Geschwindigkeit des Messobjektes im Messbereich ist, so dass es möglich ist, alle drei Moden bei annähernd gleicher Position des Messobjekts zu vermessen. Die Auswertung der Messgrößen $A_i$, $B_i$ (i = 1, ..., 3) kann dann wie vorstehend beschrieben erfolgen.

**Patentansprüche**

1. Vorrichtung zur Masse- und/oder Feuchtemessung von dielektrischen Objekten (40), mit einer Auswerteeinheit (44), mindestens einem Hochfrequenzgenerator (14, 16, 18), mindestens einem Hochfrequenzdetektor (32, 34, 36) und einem Hochfrequenzresonator (12),

**dadurch gekennzeichnet, dass**

- der mindestens eine Hochfrequenzgenerator (14, 16, 18) drei voneinander unabhängige Moden mit unterschiedlichen Resonanzfrequenzen in dem Resonator erzeugen kann, wobei die elektrischen Felder der Moden in einem Messbereich senkrecht (42) aufeinander stehen und zwei benachbarte Resonanzen einen Mindestabstand von 100 MHz besitzen,
- der mindestens eine Hochfrequenzdetektor (32, 34, 36) für jede Mode in dem Resonator die auftretenden Frequenzen messen kann, wobei der Resonator eine Eintritts- und eine Austrittsöffnung aufweist, die eine Bewegung des zu messenden dielektrischen Objekts durch den Resonator erlauben, und
- die Auswerteeinheit (44) für die gemessenen Frequenzen in jeder Mode eine Verschiebung der Resonanzfrequenz (A) und eine Veränderung der Resonanzkurve bestimmen kann und aus den bestimmten Werten für die Verschiebung der Resonanzfrequenz (A) und die Veränderung der Resonanzkurve die Masse und/oder Feuchte des sich durch den Resonator (12) bewegenden dielektrischen Objekts (80) berechnen kann, wobei die Messwerte der Moden von der Auswerteeinheit (44) für ein sich durch den Resonator (12) bewegendes Messobjekt (80) mehrfach hintereinander aufgezeichnet und zu einem Zeitpunkt ausgewertet werden, in dem für eine Mode das Maximum der Verstimmung der Resonanzfrequenz bei Durchtritt des Messobjekts (40) durch den Resonator (12) detektiert worden ist.

2. Vorrichtung nach Anspruch 1, **dadurch gekennzeichnet, dass** die Auswerteeinheit als Veränderung der Resonanzkurve eine Verbreiterung (B) der Resonanzkurve bestimmen kann.

3. Vorrichtung nach Anspruch 1 oder 2, **dadurch gekennzeichnet, dass** die Moden des Resonators in einem Frequenzbereich zwischen 0,5 GHz und 20 GHz liegen.

4. Vorrichtung nach einem der Ansprüche 1 bis 3, **dadurch gekennzeichnet, dass** der Resonator die Form eines Quaders, die Form eines Ellipsoiden oder die Form eines Zylinders mit ellipsenförmigem Querschnitt aufweist.

5. Vorrichtung nach einem der Ansprüche 1 bis 4, **dadurch gekennzeichnet, dass** zwischen Eintritts- und Austrittsöffnung ein Formatteil zur Führung des zu messenden Objekts durch den Resonator vorgesehen ist.

**6.** Vorrichtung nach einem der Ansprüche 1 bis 5, **dadurch gekennzeichnet, dass** für jede Mode eine Auskopplungseinrichtung vorgesehen ist, die sich in einem Schwingungsknoten der anderen Moden befindet.

**7.** Verfahren zur Messung von Masse und/oder Feuchte von dielektrischen Objekten, mit einer Auswerteeinheit, mindestens einem Hochfrequenzgenerator, mindestens einem Hochfrequenzdetektor und einem Resonator,
**dadurch gekennzeichnet, dass**
für den Messvorgang der mindestens eine Hochfrequenzgenerator drei voneinander unabhängige Moden in dem Resonator erzeugt, wobei die elektrischen Felder der Moden in einem Messbereich senkrecht aufeinander stehen und zwei benachbarte Resonanzen einen Mindestabstand von 100 MHz besitzen und mit dem mindestens einen Hochfrequenzdetektor für jede Mode in dem Resonator auftretende Frequenzen gemessen werden, wobei der Resonator eine Eintritts- und eine Austrittsöffnung aufweist, die eine Bewegung des zu messenden dielektrischen Objekts durch den Resonator erlauben und die Auswerteeinheit für die gemessenen Frequenzen jeder Mode eine Verschiebung der Resonanzfrequenz und eine Veränderung der Resonanzkurve auswertet und aus der Auswertung Masse und/oder Feuchte des dielektrischen Objekts bestimmt, wobei die Messwerte der Moden für ein sich durch den Resonator bewegendes Messobjekt mehrfach hintereinander aufgezeichnet und zu einem Zeitpunkt ausgewertet werden, in dem für eine Mode das Maximum der Verstimmung der Resonanzfrequenz bei Durchtritt des Messobjekts durch den Resonator detektiert worden ist.

**8.** Verfahren nach Anspruch 7, **dadurch gekennzeichnet, dass** die Auswerteeinheit als Veränderung der Resonanzkurve die Verbreiterung (B) der Resonanzkurve auswertet.

**Claims**

**1.** Device and method for measuring the mass and/or humidity of dielectric objects (40) with an evaluation unit (44), at least one high frequency generator (14, 16, 18), at least one high frequency detector (32, 34, 36) and a high frequency resonator (12),
**characterized in that**

• the at least one high frequency generator (14, 16, 18) can generate three modes independent from one another in the resonator with differing resonance frequencies, wherein the electrical fields of the modes are perpendicular (42) to one another in a measurement range and two adjacent resonances have a minimum distance of 100 MHz,
• the at least one high frequency detector (32, 34, 36) can measure the occurring frequencies for each mode in the resonator, wherein the resonator has an entrance opening and an exit opening, which permit a movement of the dielectric object to be measured through the resonator, and
• the evaluation unit (44) can determine a displacement of the resonance frequency (A) and a change of the resonance curve for the measured frequencies in each mode and can calculate the mass and/or humidity of the dielectric object (40) moving through the resonator (12) from the determined values for the displacement of the resonance frequency (A) and the change of the resonance curve, wherein the measured values of the modes of the evaluation unit (44) for a measured object (40) moving through the resonator (12) are recorded multiple times in succession and evaluated at a time in which the maximum detuning of the resonance frequency in the case of passage of the measured object (40) through the resonator (12) has been detected for a mode.

**2.** The device according to Claim 1, **characterized in that** the evaluation unit can determine a broadening (B) of the resonance curve as a change of the resonance curve.

**3.** The device according to Claim 1 or 2, **characterized in that** the modes of the resonator lie in a frequency range between 0.5 GHz and 20 GHz.

**4.** The device according to any one of Claims 1 to 3, **characterized in that** the resonator has the shape of a rectangular cuboid block, the shape of an ellipsoid or the shape of a cylinder with an ellipsoidal cross-section.

**5.** The device according to any one of Claims 1 to 4, **characterized in that** a format part is provided between the entrance opening and the exit opening for guiding the object to be measured through the resonator.

**6.** The device according to any one of Claims 1 to 5, **characterized in that** a decoupling apparatus is provided for each mode which is located in an oscillation node of the other modes.

**7.** A method for measuring the mass and/or humidity of dielectric objects with an evaluation unit, at least one high frequency generator, at least one high frequency detector and a resonator,
**characterized in that**

for the measuring operation the at least one high frequency generator generates three modes independent from one another in the resonator, wherein the electrical fields of the modes are perpendicular to one another in a measurement range and two adjacent resonances have a minimum distance of 100 MHz, and frequencies occurring in the resonator are measured for each mode with the at least one high frequency detector, wherein the resonator has an entrance opening and an exit opening, which permit a movement of the dielectric object to be measured through the resonator and the evaluation unit evaluates a displacement of the resonance frequency and a change of the resonance curve for the measured frequencies in each mode and determines the mass and/or humidity of the dielectric object from the evaluation, wherein the measured values of the modes for a measured object moving through the resonator are recorded multiple times in succession and evaluated at a time in which the maximum detuning of the resonance frequency for a mode in the case of passage of the measured object through the resonator has been detected.

**8.** The method according to Claim 7, **characterized in that** the evaluation unit evaluates the broadening (B) of the resonance curve as a change of the resonance curve.

**Revendications**

**1.** Dispositif de mesure de la masse et/ou de l'humidité d'objets diélectriques (40) avec une unité d'évaluation (44), au moins un générateur de radiofréquence (14, 16, 18), au moins un détecteur de radiofréquence (32, 34, 36) et un résonateur de radiofréquence (12),
**caractérisé en ce que**

• le au moins un générateur de radiofréquence (14, 16, 18) peut générer dans le résonateur trois modes indépendants l'un de l'autre avec différentes fréquences de résonance, les champs électriques des modes étant perpendiculaires l'un à l'autre dans une plage de mesure (42) et deux résonances adjacentes ayant un écart minimal de 100 MHz,
• le au moins un détecteur de radiofréquence (32, 34, 36) peut mesurer les fréquences se produisant pour chaque mode dans le résonateur, le résonateur présentant un orifice d'entrée et un orifice de sortie qui permettent un mouvement de l'objet diélectrique à mesurer à travers le résonateur, et
• l'unité d'évaluation (44) peut déterminer dans chaque mode pour les fréquences mesurées un décalage de la fréquence de résonance (A) et une modification de la courbe de résonance et peut calculer à partir des valeurs déterminées pour le décalage de la fréquence de résonance (A) et la modification de la courbe de résonance la masse et/ou l'humidité de l'objet diélectrique (40) se déplaçant à travers le résonateur (12), les valeurs mesurées des modes étant enregistrées plusieurs fois successivement par l'unité d'évaluation (44) pour un objet à mesurer (40) se déplaçant à travers le résonateur (12) et étant évaluées à un moment où le maximum de désaccord de la fréquence de résonance a été détecté pour un mode au passage de l'objet à mesurer (40) à travers le résonateur (42).

**2.** Dispositif selon la revendication 1, **caractérisé en ce que** l'unité d'évaluation peut déterminer comme modification de la courbe de résonance un élargissement (B) de la courbe de résonance.

**3.** Dispositif selon la revendication 1 ou 2, **caractérisé en ce que** les modes du résonateur sont situés dans une plage de fréquences entre 0,5 GHz et 20 GHz.

**4.** Dispositif selon l'une quelconque des revendications 1 à 3, **caractérisé en ce que** le résonateur a la forme d'un parallélépipède rechtangle, la forme d'un ellipsoïde ou la forme d'un cylindre avec une coupe transversale elliptique.

**5.** Dispositif selon l'une quelconque des revendications 1 à 4, **caractérisé en ce qu'**est prévue entre l'orifice d'entrée et l'orifice de sortie une pièce de format pour le guidage de l'objet à mesurer à travers le résonateur.

**6.** Dispositif selon l'une quelconque des revendications 1 à 5, **caractérisé en ce qu'**est prévu pour chaque mode un organe de découplage qui se trouve à un noeud d'oscillation des autres modes.

**7.** Procédé de mesure de la masse et/ou de l'humidité d'objets diélectriques, avec une unité d'évaluation, au moins un générateur de radiofréquence, au moins un détecteur de radiofréquence et un résonateur,
**caractérisé en ce que**
pour la mesure, le au moins un générateur de radiofréquence génère dans le résonateur trois modes indépendants l'un de l'autre, les champs électriques des modes étant perpendiculaires l'un à l'autre dans une plage de mesure et deux résonances adjacentes ayant un écart minimal de 100 MHz et, avec le au moins un détecteur de radiofréquence, les fréquences apparaissant dans le résonateur sont mesurées pour chaque mode, le résonateur présentant un orifice d'entrée et un orifice de sortie qui permettent un mouvement de l'objet diélectrique à mesurer à travers le résonateur, et l'unité d'évaluation évalue dans chaque mode pour les fréquences mesurées un décalage de la fréquence de résonance et une modification de la courbe de résonance et détermine à partir des résultats de l'évaluation la masse et/ou l'humidité de l'objet diélectrique, les valeurs mesurées des modes étant enregistrées plusieurs fois successivement pour un objet à mesurer se déplaçant à travers le résonateur et étant évaluées à un moment où le maximum de désaccord de la fréquence de résonance a été détecté pour un mode au passage de l'objet à mesurer à travers le résonateur.

8. Procédé selon la revendication 7, **caractérisé en ce que** l'unité d'évaluation évalue comme modification de la courbe de résonance l'élargissement (B) de la courbe de résonance.

Fig. 1

Fig. 2

Generator 1 — 14

Bandfilter — 26

Detektor 1 — 32

Generator 2 — 16

Bandfilter — 28

Detektor 2 — 34

Generator 3 — 18

Bandfilter — 30

Detektor 1 — 36

Evaluation of all individual measuring processes — 44

Mass of Diel. — 46

Moisture of Diel. body — 48

22 · 38 · 40 · 24 · 42 · 20 · 12

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1669755 B1
- EP 1467191 B1
- EP 0372992 A1
- US 5124662 A
- DE 10226845 A1

**In der Beschreibung aufgeführte Nicht-Patentliteratur**

- **B.J. DOWNING et al.** Online Fruit Weighing Using a 500 MHz Waveguide Cavity. *Electronics Letters,* vol. 24 (4), 212-213
- **A. DE WAAL ; PROFESSOR B. J. DOWNING.** *ROCK DIFFERENTIATION USING THE PROPERTIES OF RESONANT WAVEGUIDE CAVITIES AT 500 MHZ,* 03. November 1987